(19) Europäisches Patentamt
European Patent Office
Office européen des brevets

(11) Veröffentlichungsnummer: **0 373 536 B1**

(12) **EUROPÄISCHE PATENTSCHRIFT**

(45) Veröffentlichungstag der Patentschrift: **06.07.94**

(51) Int. Cl.5: **G01L 9/00**

(21) Anmeldenummer: **89122704.3**

(22) Anmeldetag: **08.12.89**

(54) **Überlastfester kapazitiver Drucksensor.**

(30) Priorität: **12.12.88 DE 8815425 U**

(43) Veröffentlichungstag der Anmeldung:
**20.06.90 Patentblatt 90/25**

(45) Bekanntmachung des Hinweises auf die
Patenterteilung:
**06.07.94 Patentblatt 94/27**

(84) Benannte Vertragsstaaten:
**BE DE FR GB**

(56) Entgegenhaltungen:
EP-A- 212 942          EP-A- 0 003 387
DE-A- 2 021 479        DE-A- 2 459 612
DE-A- 2 709 945        DE-A- 3 137 219
US-A- 3 405 559

PATENT ABSTRACTS OF JAPAN, Band 8, Nr.
286 (P-324)(1723), 27. Dezember 1984; & JP-
A-59148842

(73) Patentinhaber: **Fibronix Sensoren GmbH
Werftstrasse 208
D-24143 Kiel(DE)**

(72) Erfinder: **Orlowski, Rainer, Prof Dr.
Grillenweg 12
D-2400 Lübeck(DE)**
Erfinder: **Dasch, Wolfgang, Dr.
Dorfstrasse 18a
D-2301 Rumohr(DE)**
Erfinder: **Liehr, Manfred
Strehlowweg 28
D-2000 Hamburg 52(DE)**
Erfinder: **Schur, Michael
Dellestrasse 17
D-2000 Hamburg 70(DE)**

(74) Vertreter: **Patentanwälte Dipl.-Ing. Klaus
Westphal Dr.rer.nat. Otto Buchner Dr.rer.nat.
Bernd Mussgnug Dr.-Ing. Peter Neunert
Waldstrasse 33
D-78048 Villingen-Schwenningen (DE)**

**Beschreibung**

Die vorliegende Erfindung betrifft einen überlastfesten, kapazitiven Drucksensor der im Oberbegriff des Anspruchs 1 genannten Art.

Aus DE-OS 24 59 612 ist ein derartiger Drucksensor mit zwei elektrisch isolierenden, schalenförmigen Teilen bekannt, die im Randbereich verbunden sind. Beide Schalen stellen im Mittelteil Membranen dar, die sich druckabhängig auslenken. Die Auslenkungen der Membranen werden mittels zweier Kondensatoren gemessen, wobei der eine stark und der andere schwach druckabhängig reagiert. Die beiden Kondensatoren sind hierbei durch Schichtelektroden realisiert, die sich auf den Innenseiten der von den beiden schalenförmigen Teilen ausgebildeten, im Querschnitt rechteckigen Innenkammer befinden. Aus dem Verhältnis der Kondensatorkapazitäten wird der zu messende Druck bestimmt.

In DE-OS 2 709 945 C2 ist ein ähnlicher Drucksensor beschrieben, der aus zwei ebenen, kreisförmigen, elektrisch isolierenden Platten besteht, welche im Randbereich durch einen Glaslotring verschmolzen sind, wodurch eine ebene, zylindrische Kammer gebildet wird. Die Dicke des Glaslotringes bestimmt den Abstand der beiden ebenen Platten. Beide Platten können als Membranen wirken. Die druckabhängige Bewegung der Membranen wird durch einen Kondensator erfaßt, der mit auf den Innenflächen der Kammer aufgebrachten Schichtelektroden realisiert ist. Die elektrischen Anschlüsse der Schichtelektroden sind durch den Glasring nach außen geführt und liegen in der Ebene der Innenflächen der Kammer.

Ein im Prinzip vergleichbarer Drucksensor ist mit US 4 178 621 bekannt geworden. Bei diesem ist der Abstand der beiden elektrisch isolierenden Platten durch die Dicke eines Glaslotringes bestimmt. Mit Hilfe von zwei Schichtelektroden ist ein Kondensator realisiert, der die druckabhängige Bewegung einer der Platten, der Membran, erfaßt. Die elektrischen Anschlüsse der kapazitiven Beläge sind jeweils in der Ebene der Kammerinnenseiten unter dem Glasring hindurch nach außen geführt und dann senkrecht durch Löcher in der dickeren Platte auf deren ebenen Rückseite durchkontaktiert.

Weitere sehr ähnliche Konstruktionen von kapazitiven Drucksensoren sind in den Schriften DE-OS 2 221 062, DE-OS 2 021 479, DE-OS 3 137 219 und US 3,405,559 beschrieben.

Bei allen bekannten Drucksensoren dieser Art legt sich die als Membran ausgebildete ebene Platte bei Drucküberlast in der Mitte an die gegenüberliegende Platte an. Bei weiterem Druckanstieg wird die Membran stark verformt und insbesondere im Randbereich zur Einspannung hin extrem belastet. Hier erfolgt dann auch bei weiterer Steigerung des Drucks der Bruch der Membran. Die Bruchlinie liegt kreisförmig am Rand des fest eingespannten Membranteils. Grundsätzlich ist die mechanische Radialspannung $\sigma$ in der Membranoberfläche abhängig von den Dimensionen. Dabei gilt folgende Beziehung:

$$\sigma_r = \frac{3}{8} \frac{R^2}{h^2} \left[ (3 + \gamma) \frac{r^2}{R^2} - (1 + \gamma) \right] \cdot P \qquad (1)$$

wobei r der Abstand von der Membranmitte bis zum Membranrand, R der Membranradius, innerer Radius des Glaslotrings 3, h die Membrandicke und $\gamma$ die Poissonzahl der Membran ist.

Die größte Belastung in Form von Zugspannungen erfährt die Membran auf der mit dem Druck P belasteten Seite im Bereich der fest eingespannten Membran.

$$\sigma_r (r = R) = \frac{3}{4} \frac{R^2}{h^2} \cdot P \qquad (2)$$

Die mechanischen Druckspannungen in der Mitte der Mebran nach folgender Beziehung

$$\sigma_r (r = 0) = -\frac{3}{8} \frac{R^2}{h^2} (1 + \gamma) \cdot P \qquad (3)$$

sind dagegen wesentlich kleiner. Diese Druckspannungen treten auf der gegenüberliegenden Membranseite (Innenkammer) als Zugspannungen auf.

Die Erfindung bezieht sich auf einen Drucksensor, bei welchem die druckempfindliche Membran aus einem oxydischen Werkstoff, z.B. $Al_2O_3$-Keramik, besteht. Bei diesem Membranwerkstoff mit einem Wert $\gamma$ = 0,2 ist bei normaler Druckbelastung die Radialspannung am Membranrand um den Faktor 1,67 größer als in der Membranmitte. Im Falle der Drucküberlastung wird zwar in der Membranmitte ein Anstieg der mechanischen Radialspannung durch Anlage an der gegenüberliegenden Kammerwand verhindert, aber die ohnehin vorhandenen größeren Radialspannungen am Rand der Membran erhöhen sich weiterhin bis zur Bruchgrenze.

Es ist daher Aufgabe der vorliegenden Erfindung, einen Drucksensor der eingangs definierten Art zu schaffen, der eine erheblich höhere Überlastfestigkeit aufweist.

Gelöst wird diese Aufgabe mit den im Anspruch 1 im einzelnen angegebenen Merkmalen.

Die Erhöhung der Überlastfestigkeit des kapazitiven Drucksensors wird im wesentlichen dadurch erreicht, daß die Membran im Überlastfall sich nicht zuerst mittig sondern zuerst ringförmig im Randbereich anlegt. Bei einer bevorzugten Ausführungsform der Erfindung wirkt dieser Anlagering optimal unterstützend am Ort r* mit einem Abstandsverhältnis r*/R = 0,61 bei einer Keramikmembran, da entsprechend Gleichung (1) hier die mechanische Radialspannung null ist.

Aus EP 0 212 942 A2 ist bei einem Drucksensor mit metallischer Membran zwar der Vorschlag bekannt, zur Verbesserung der Überlastfestigkeit im Randbereich der Membran einen Stützring zuzuordnen. Dieser Vorschlag läßt sich jedoch nicht ohne weiteres auf den Drucksensor der erfindungsgemäßen Gattung übertragen, da bei dem bekannten Drucksensor die metallische Membran gelenkig mit dem Kammerrand verbunden ist, also anders als die aus oxydischem Werkstoff bestehende Membran nicht fest eingespannt ist. Hierdurch ergeben sich grundsätzlich andere Spannungs- und Biegeverhältnisse.

Eine weitere Steigerung der Überlastfestigkeit bei dem erfindungsgemäßen Drucksensor wird erreicht, wenn die Membran sich nicht nur an einem, sondern an mehreren, treppenförmig angebrachten Anlageringen anlegt und zusätzlich in der Mitte abgefangen wird.

Weitere Merkmale der Erfindung sind Gegenstand der Unteransprüche, deren Eigenschaften und Vorteile anhand der in den Zeichnungen dargestellten Ausführungsbeispiele erläutert sind.

In den Zeichnungen zeigen

Figur 1 -     einen erfindungsgemäßen kreissymmetrischen Sensor im Querschnitt,

Figur 2 -     die innere Oberfläche der Grundplatte des Sensors gemäß Figur 1 mit den verschiedenen Belägen,

Figur 3 -     die innere Oberfläche der Membran des Sensors gemäß Figur 1 mit den verschiedenen Belägen,

Figuren 4, 5, 6, 7 und 8 -     jeweils Querschnitte von kreissymmetrischen Sensoren mit unterschiedlichen Anordnungen der Beläge auf der Membran und der Grundplatte nach weiteren erfindungsgemäßen Ausführungsformen.

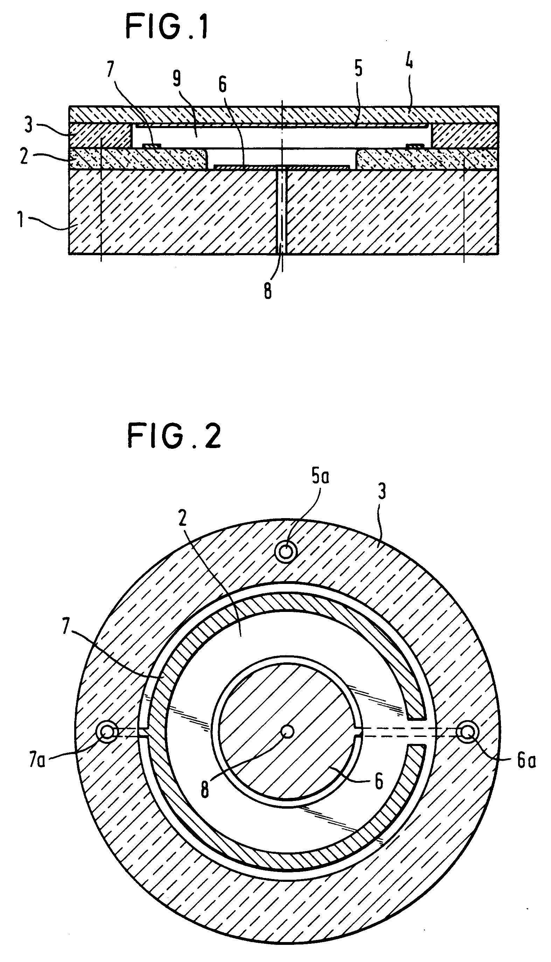

Der prinzipielle Aufbau eines erfindungsgemäßen Sensors ist in den Figuren 1, 2 und 3 gezeigt. Der in Figur 1 im Querschnitt dargestellte Sensor besteht aus einer zylindrischen Grundplatte 1 mit ebenen Oberflächen, auf der sich mindestens ein Stützring 2 befindet. Auf dem Stützring 2 ist ein Glaslotring 3 vorgesehen, der die Membran 4 fest mit dem Stützring 2 verbindet. Stützring 2 und Glaslotring 3 sind elektrisch isolierend ausgeführt. Zwischen der Membran 4 und der Grundplatte 1 ist damit eine flache Kammer 9 mit stufenförmigen Randprofilen realisiert.

Der Messung der druckabhängigen Durchbiegung der Membran 4 dienen mindestens zwei Kondensatoren, deren Kapazitätsänderungen zur Druckmessung ausgenutzt werden. Diese sind durch in der Kammer 9 vorgesehene Schichtelektroden 5, 6, 7 realisiert. Beide Kondensatoren haben eine gemeinsame Schichtelektrode 5, die ganzflächig auf der Innenseite der Membran 4 aufgebracht ist. Als Gegenelektrode des nur wenig druckabhängigen Referenzkondensators Cr ist eine ringförmig auf dem Stützring liegende Schichtelektrode 7 vorgesehen.

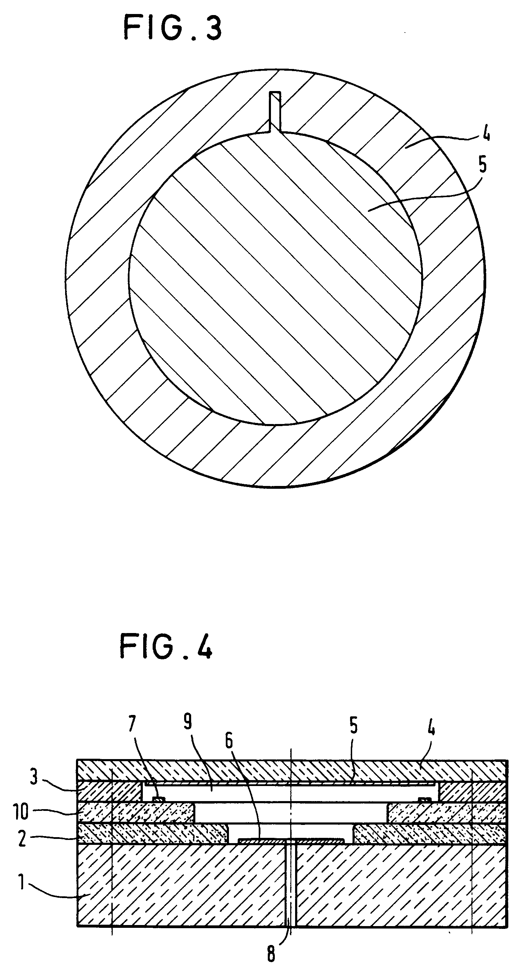

Die elektrischen Anschlüsse der kapazitiven Schichtelektroden 5, 6 und 7 sind, wie in den Figuren 2 und 3 dargestellt, durch schmale, elektrisch leitende Stege zu Durchkontaktierungsbohrungen 5a, 6a und 7a geführt. Von dort besteht eine elektrisch leitende Verbindung zu Anschlüssen auf der rückseitigen Fläche der Grundplatte 1. Hierzu sind in der Grundplatte entsprechende Bohrungen vorhanden. Der elektrische Anschlußsteg der Schichtelektrode 6 des Meßkondensators Cm ist unterhalb des Stützrings 2 hindurchgeführt. Der Stützring 2 ist kreisförmig um die Durchkontaktierungsbohrung 6a herum ausgespart. Der elektrische Anschlußsteg der Schichtelektrode 7 des Referenzkondensators Cr ist unterhalb des Glaslotrings 4 hindurchgeführt. Der Glaslotring 3 ist kreisförmig um die Durchkontaktierungsbohrung 7a herum ausgespart. Der elektrische Anschlußsteg der Schichtelektrode 5, welche die gemeinsame Elektrode für Meß- und Referenzkondensator darstellt, ist auf der Innenfläche der Membran 4 unterhalb des Glaslotrings 3 zur Durchkontaktierungsbohrung 5a geführt. Der Glaslotring 3 und der Stützring 2 sind kreisförmig um die Durchkontaktierungsbohrung 5a herum ausgespart. Die Art der elektrischen Durchführung der Kontakte von der rückseitigen Fläche der Grundplatte 1 zu den Schichtelektroden 5, 6 und 7 ist bekannt und nicht Gegenstand dieser Erfindung.

Die Grundplatte weist in der Mitte eine Bohrung 8 auf, die in die Kammer 9 zwischen Membran 4 und Grundplatte 1 führt. Bei Realisierung eines Absolutdrucksensors wird mit Hilfe dieser Bohrung 8 die Kammer 9 evakuiert. Anschließend wird die Bohrung 8 verschlossen. Bei einem Relativdrucksensor bleibt die Bohrung 8 offen, so daß in der Kamer 9 der Umgebungsdruck herrscht.

Der nach der Erfindung vorgesehene Stützring 2 führt zu einem grundsätzlich anderen Aufbau des Drucksensors dieser Art. Bei dem dargestellten Ausführungsbeispiel reicht der Stützring 2 bis an den Rand des Sensors. Die Höhe ist so gewählt, daß sich die Innenseite der druckbelasteten Membran 4 zunächst ringförmig an den Stützring 2 anlegt. Bei weiterer Drucksteigerung wird eine Bewegung der Membran in diesem Bereich verhindert und eine Zunahme der Radialspannungen im kritischen Randbereich der Membran wesentlich verlangsamt.

Der Stützring bedingt eine stufenförmige Ausbildung der Kammer 9. Ihre Höhe im mittleren Bereich der Membran ist nicht mehr durch die Höhe des Glaslotrings 3, sondern durch die Summe der Höhen von Glaslotring 4 und Stützring 2 festgelegt. Entsprechend dem Biegeprofil einer druckbelasteten, kreisförmigen Membran mit fester Randeinspannung nach der Gleichung

$$\omega_r = \frac{3}{16} \cdot \frac{(1 - \gamma^2)}{E} \cdot \frac{R^4}{h^3} \cdot (1 - \frac{r^2}{R^2}) \cdot P \quad (4)$$

findet die größte Durchbiegung $\omega$ im mittleren Teil der Membran statt. Für r = 0 ergibt sich:

$$\omega_r (r = 0) = \frac{3}{16} \cdot \frac{(1 - \gamma^2)}{E} \cdot \frac{R^4}{h^3} \cdot P \quad (5)$$

So ist zum Beispiel bei Verwendung von $Al_2O_3$-Keramik als Membranwerkstoff mit einem Wert für den Elastizitätsmodul von E = 3,3 x $10^{11}$N/m$^2$ und bei einem Stützring mit dem Abstandsverhältnis r*/R = 0,61 die Höhe des Stützrings 2 ca. 1,8 mal größer zu wählen als die des Glaslotrings 3.

Die Schichtelektrode 7 des Referenzkondensators Cr befindet sich im Randbereich der Membran auf dem Stützring und damit nicht in der gleichen Ebene wie die Schichtelektrode 6 des mittigen Meßkondensators Cm. Der Abstand der den Referenzkondensator Cr bildenden Schichtelektroden ist im drucklosen Zustand dadurch wesentlich kleiner als der Abstand der den Meßkondensator Cm bildenden Schichtelektrode. Bei der im beschriebenen Ausführungsbeispiel gewählten Geometrie ist also bei gleichen Kapazitäten von Cr und Cm in drucklosem Zustand die Fläche der Schichtelektrode 7 um den Faktor 2,8 kleiner zu wählen als die der Schichtelektrode 6. Hierdurch wird der Einfluß der Durchbiegung der druckbelasteten Seite der Membran im Randbereich wesentlich verringert und die Linearität des druckproportionalen Ausgangssignals Cr/Cm entsprechend verbessert.

Der Abstand zwischen den Schichtelektroden 5 und 7 kann auch dann vorteilhafterweise erheblich verringert werden, wenn z.B. die in Drucktechnik hergestellte Elektrode 7 unter dem Stützring vorgesehen ist und das Material des Stützringes eine relative Dielektrizitätskonstante $\epsilon_\gamma \gg 1$ aufweist.

In Figur 4 ist im Querschnitt eine weitere Ausführungsform eines überlastfesten, kapazitiven Drucksensors gemäß der Erfindung dargestellt, dessen Stützringe einen stufenförmigen Aufbau aufweisen. Auf dem Stützring 2 befindet sich ein weiterer Stützring 10. Die radialen Maße der Stützringe 2 und 10 sind so gewählt, daß das Biegeprofil der druckbelasteten Membran 4 dem Verlauf nach Gleichung (4) nachgebildet ist. Idealerweise berührt die Membran 4 die inneren Kanten der Stützringe 2 und 10 bei einem bestimmten Druckwert und verformt sich bei weiterer Druckbelastung nur unwesentlich. Zur Realisierung eines solchen Anlagebettes können auch mehr als zwei Stützringe verwendet werden.

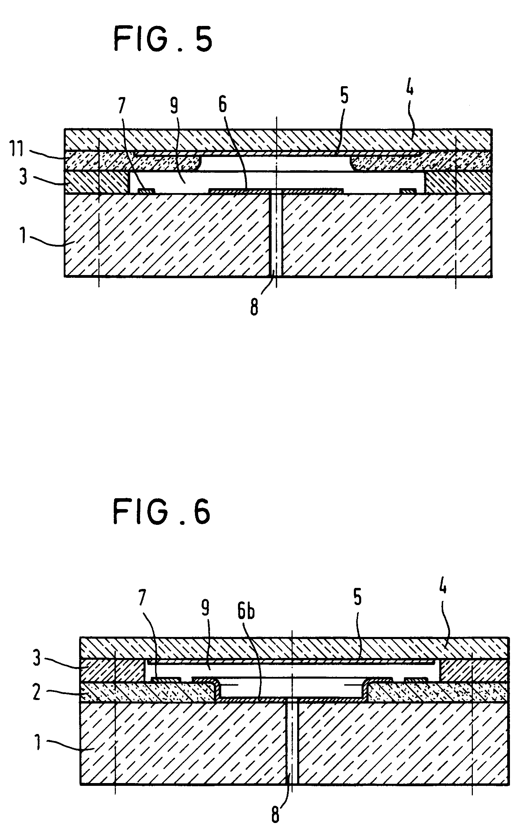

In Figur 5 ist im Querschnitt eine weitere Ausführungsform eines erfindungsgemäßen überlastfesten, kapazitiven Drucksensors dargestellt, bei dem ein Stützring 11 auf der Innenseite der druckbelasteten Membran angeordnet ist. Die Schichtelektrode 5 ist ganz ähnlich der in Figur 3 dargestellten und befindet sich im Randbereich unterhalb des Stützrings 11. Sofern der Stützring 11 dabei aus einem Werkstoff besteht, der eine relative Dielektrizitätskonstante $\epsilon_\gamma \gg 1$ aufweist, wird auch hier der Flächenbedarf für den Referenzkondensator Cr erheblich verringert. Gemäß diesem Beispiel können bei der Anwendung von mehreren Stützringen einige auf der Innenseite der Membran 4 und einige auf der Innenseite der Grundplatte 1 angeordnet werden.

In Figur 6 ist im Querschnitt eine weitere Ausführungsform eines überlastfesten, kapazitiven Drucksensors dargestellt, bei dem die Schichtelektrode 6a des Meßkondensators Cm zur Vergrößerung der kapazitiven Fläche über den inneren kreisförmigen Rand des Stützrings 2 geführt ist und sich auch ringförmig im inneren Bereich des Stützrings 2 befindet.

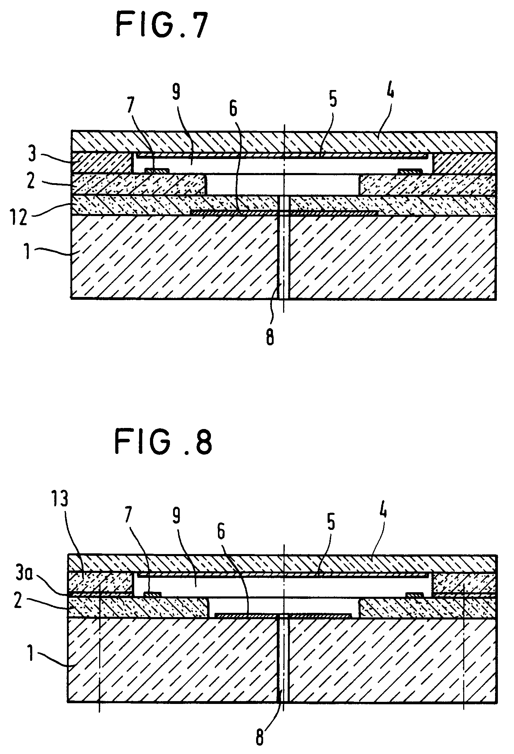

Eine Vergrößerung der Fläche des Meßkondensators kann auch dadurch erreicht werden, daß die Schichtelektrode 6a zum Teil unterhalb des Stützrings 2 aufgebracht wird (siehe auch Figur 7 ohne Stützring 12). Durch diese Elektrodengeometrie wird eine Verbesserung der Linearität der Sensorkennlinie erreicht, wenn der Druck P aus dem Verhältnis der Kapazitäten Cr/Cm ermittelt wird.

In Figur 7 ist im Querschnitt eine weitere Ausführungsform eines überlastfesten, kapazitiven Drucksensors gemäß der vorliegenden Erfindung dargestellt, bei dem die Schichtelektrode 6 des Meßkondensators Cm durch eine vollflächig aufgebrachte Abdeckschicht 12 geschützt ist. Hierdurch wird bei extremer Überlast ein elektrischer Kurzschluß des Meßkondensators Cm vermieden.

Figur 8 zeigt eine besonders bevorzugte Ausführungsform der Erfindung, bei welcher zusätzlich zu dem Stützring 2 ein Abstandsring 13 vorgesehen ist. Durch diesen Abstandsring 13 und den Stützring wird dabei im wesentlichen der Abstand der Platten 1, 4 bestimmt. Auch können anstelle eines Stützringes 2, wie bei dem Ausführungsbeispiel nach Figur 4, mehrere Stützringe vorgesehen sein. Statt des normalen Glaslotrings 3 wird in diesen Fällen nur eine sehr dünne ringförmige Glasschicht 3a angebracht, die sich zwischen dem oder den Stützringen 2 und dem Abstandsring 13 befindet. Bei der hier dargestellten Ausführungsform ist der Abstandsring 13 auf der als Membran dienenden Platte 4 angebracht, wobei nur ein Stützring 2 Verwendung findet, der an der festen Platte 1 angebracht ist.

Vorteilhafterweise kann dabei die Höhe des Glaslotrings 3a im Verhältnis zur Höhe der Schichten 2 und 13 so klein gewählt werden, daß die Höhe des Glaslotrings 3a nahezu keinen Einfluß mehr auf den kapazitätsrelevanten Abstand der Elektroden 5, 6 und 7 hat. Die weiche und stärker temperaturveränderliche Masse des Glaslots kann somit den Elektrodenabstand kaum noch beeinflußen, da beispielsweise temperaturabhängige Veränderungen der Dicke des Glaslotrings kaum noch Einfluß auf die Kapazitäten haben.

In einer bevorzugten Ausführungsform der Erfindung ist die Grundplatte 1 und die Membran 4 aus einem oxydischen Werkstoff wie z.B. Quarz, $ZrO_2$-Keramik oder $Al_2O_3$-Keramik hergestellt. Zum Aufbringen der verschiedenen Schichten eignet sich das Siebdruckverfahren. Die verschiedenen Schichten werden mit Hilfe von Dickschichtpasten bei Raumtemperatur aufgedruckt und bei wesentlich höheren Temperaturen eingebrannt. Erst nach dem Brennprozeß haben die Schichten ihre für die Funktion wichtigen mechanischen und elektrischen bzw. dielektrischen Eigenschaften. Die verschiedenen Schichthöhen werden durch die Art der verwendeten Dickschichtpaste und durch die Art des Siebdrucks realisiert. Die Stützringe 2, 10 bzw. 11, die Abdeckschicht 12 und der Abstandsring 13 sind aus einer keramisierenden Masse wie z.B. Glaskeramik hergestellt. Im gebrannten Zustand ist diese Masse sehr hart, elektrisch isolierend und haftet fest auf der Keramik.

Die Schicht des Glaslotrings 3 bzw. 3a, welche vorzugsweise aus einem leicht schmelzbaren Glas besteht, hat die Aufgabe, sowohl Stützring und Membran zu verbinden als auch die Kammer 9 nach außen hin dicht abzuschließen.

Die Schichtelektroden 5, 6,7 bzw. 6a sind mit Hif le einer Dickschichtpaste aufgedruckt, die im eingebrannten Zustand einen elektrisch leitfähigen Metallbelag zurückläßt, der eine konstruktiv vernachlässigbare Höhe aufweist. Daher können diese Schichtelektroden auch unterhalb der Stützringe und des Glasrings hindurchgeführt werden, ohne daß stufenartige Höhenänderungen auftreten.

Die Schichtelektroden 5, 6, 7 bzw. 6a können auch mit Hilfe der Dünnschichttechnik, d.h. durch Aufdampfen bzw. Sputtern von metallischen Belägen, realisiert werden.

## Patentansprüche

1. Überlastfester kapazitiver Drucksensor mit zwei elektrisch isolierenden, im Randbereich über ein Ringelement (3) miteinander verbundenen und mit dem zu messenden Druck beaufschlagbaren kreisscheibenförmigen Platten (1, 4) aus einem oxydischen Werkstoff, von denen eine als druckempfindliche Membran (4) ausgebildet ist, die eine gasgefüllte oder evakuierte Kammer (9) bilden und deren Innenflächen mit kreisförmigen und kreisringförmigen Schichtelektroden (5, 6, 7) zur Bildung eines Meß- und eines Referenzkondensators versehen sind, wobei beide Kondensatoren unterschiedliche Druckabhängigkelten aufweisen, gekennzeichnet durch folgende Merkmale :

a. beide Platten (1, 4) weisen ebene Oberflächen auf;

b. auf mindestens einer der Platten (1 oder 4) ist mindestens ein kreisringförmiger Stützring (2, 10; 11) nahe des Randbereiches angeordnet;

c. eine kreisringförmige Schichtelektrode (7) des Referenzkondensators ist im Bereich des Stützringes (2, 10; 11) nahe des Randbereichs angeordnet und mit dem Grundkörper (1) unmittelbar oder mittelbar verbunden.

d. auf der ebenen Oberfläche des Grundkörpers (1) ist in dem Bereich, welcher dem Inneren der kreisringförmigen Schichtelektrode (7) entspricht, eine kreisförmige Schichtelektrode (6) des Meßkondensators angeordnet;

e. auf der Innenfläche der druckempfindlichen Membran (4) ist eine sich bis zum Randbereich erstreckende Schichtelektrode (5) vorgesehen, welche die Gegenelektrode sowohl für den Meß- als auch den Referenzkondensator bildet.

2. Drucksensor nach Anspruch 1, dadurch gekennzeichnet, daß das Ringelement ein Glaslotring (3, 3a) ist, welcher zwischen der Membran (4) und dem Grundkörper (1) angeordnet ist.

3. Drucksensor nach Anspruch 1 oder 2, dadurch gekennzeichnet, daß die keisringförmige Schichtelektrode (7) des Referenzkondensators auf dem Stützring (2) oder einem der Stützringe (2, 10) angebracht ist.

4. Drucksensor nach Anspruch 1, dadurch gekennzeichnet, daß die kreisringförmige Schichtelektrode (7) des Referenzkondensators unter dem oder den Stützringen (11) angebracht ist und das Material des oder der Stützringe(s) (11) eine relative Dielektrizitätskonstante $\epsilon r >> 1$ aufweist.

5. Drucksensor nach einem der vorhergehenden Ansprüche, dadurch gekennzeichnet, daß der Stützring oder die Stützringe (2, 10) auf der ebenen Oberfläche des Grundkörpers (1) angebracht ist/sind.

6. Drucksensor nach Anspruch 5, dadurch gekennzeichnet, daß übereinander zwei Stützringe (2, 10) mit unterschiedlichen Durchmessern derart am Grundkörper (1) angebracht sind, daß ihre innen gelegenen Ränder im Falle der Überbelastung Anlagen für die Membran (4) bilden.

7. Drucksensor nach einem der Ansprüche 1 bis 5, dadurch gekennzeichnet, daß mindestens ein Stützring (11) auf der Innenfläche der druckempfindlichen Membran (4) angebracht ist.

8. Drucksensor nach Anspruch 6, dadurch gekennzeichnet, daß nur ein Stützring (2) vorgesehen ist, dessen Innenradius (r*) das etwa 0,61fache des Innenradius (R) des Ringelementes (3) beträgt.

9. Drucksensor nach Anspruch 8, dadurch gekennzeichnet, daß der Stützring (2) etwa 1,8 mal so stark ist wie das Ringelement (3) oder die Kombination aus Ringelement (3a) und Abstandsring (13).

10. Drucksensor nach einem der vorhergehenden Ansprüche, dadurch gekennzeichnet, daß auf der Innenfläche des Grundkörpers (1) oberhalb der Schichtelektrode (6) des Meßkondensators eine isolierende Schicht (12) angebracht ist, welche die Schichtelektrode (6) zur Vermeidung eines elektrischen Kurzschlusses bei extremer Druckbelastung vollfächig abdeckt.

11. Drucksensor nach einem der vorhergehenden Ansprüche, dadurch gekennzeichnet, daß die Platten aus $Al_2O_3$-Keramik, SiC-Keramik, Quarz oder insbesondere teil- oder vollstabilisierter $ZrO_2$-Keramik bestehen.

12. Drucksensor nach einem der vorhergehenden Ansprüche, dadurch gekennzeichnet, daß der Stützring oder die Stützringe (2, 10) aus einer keramischen Masse, beispielsweise Glaskeramik, besteht/bestehen und im Siebdruckverfahren aufgebracht ist/sind.

**13.** Drucksensor nach einem der vorhergehenden Ansprüche, dadurch gekennzeichnet, daß die Schichtelektroden (5, 6, 7) in Form einer Paste aufgedruckt und eingebrannt sind.

**14.** Drucksensor nach einem der Ansprüche 1 bis 12, dadurch gekennzeichnet, daß die Schichtelektroden (6, 7) mit Hilfe einer Dünnschichttechnik, insbesondere durch Aufdampfen bzw. Sputtern, hergestellt sind.

**Claims**

**1.** An overload-proof capacitive pressure sensor having two electrically insulating, circular disc-shaped plates (1, 4) made from an oxidic material, which are connected to one another in the edge region via a ring element (3) and are loaded with the pressure to be measured, one plate of which is constructed as a pressure-sensitive membrane (4), which form a gas-filled or evacuated chamber (9) and the inner faces of which are provided with circular and annular electrodes (5, 6, 7) to form a precision and a reference capacitor, whereby both capacitors have different pressure dependences,
**characterised by** the following features:
a. both plates (1, 4) comprise plane surfaces;
b. on at least one of the plates (1 or 4) is disposed at least one annular bearing ring (2, 10; 11) close to the edge region;
c. an annular coated electrode (7) of the reference capacitor is disposed in the region of the bearing ring (2, 10; 11) close to the edge region and is connected directly or indirectly to the base member (1);
d. on the plane surface of the base member (1) is disposed a circular coated electrode (6) of the precision capacitor in the region corresponding to the interior of the annular coated electrode (7);
e. on the inner surface of the pressure sensitive membrane (4) is provided a coated electrode (5) extending right to the edge region, which forms the counter-electrode both for the precision and also for the reference capacitor.

**2.** A pressure sensor according to Claim 1,
**characterised in that** the ring element is a glass solder ring (3, 3a), which is disposed between the membrane (4) and the base member (1).

**3.** A pressure sensor according to Claim 1 or 2,
**characterised in that** the annular coated electrode (7) of the reference capacitor is mounted on the bearing ring (2) or one of the bearing rings (2, 10).

**4.** A pressure sensor according to Claim 1,
**characterised in that** the annular coated electrode (7) of the reference capacitor is mounted under the bearing ring(s) (11) and the material of the bearing ring(s) (11) has a relative permittivity $\epsilon r \gg 1$.

**5.** A pressure sensor according to one of the preceding Claims,
**characterised in that** the bearing ring or rings (2, 10) is/are mounted on the plane surface of the base member (1).

**6.** A pressure sensor according to Claim 5,
**characterised in that** two bearing rings (2, 10) having different diameters are mounted one on top of the other on the base member (1) in such a manner that their inner edges form bearing surfaces for the membrane in the event of overloading.

**7.** A pressure sensor according to one of Claims 1 to 5,
**characterised in that** at least one bearing ring (11) is mounted on the inner surface of the pressure-sensitive membrane (4).

**8.** A pressure sensor according to Claim 6,
**characterised in that** only one bearing ring (2) is provided, the internal radius (r*) of which is roughly 0.61 times the internal radius (R) of the ring element (3).

9. A pressure sensor according to Claim 8,
**characterised in that** the bearing ring (2) is roughly 1.8 times as thick as the ring element (3) or the combination of the ring element (3a) and spacer ring (13).

10. A pressure sensor according to one of the preceding Claims,
**characterised in that** on the inner surface of the base member (1) above the coated electrode (6) of the precision capacitor is mounted an insulating layer (12), which with its entire surface covers the coated electrode (6) to avoid an electrical short circuit in the event of extreme pressure loading.

11. A pressure sensor according to one of the preceding Claims,
**characterised in that** the plates are made from $Al_2O_3$ ceramics, SiC ceramics, quartz or in particular partially or completely stabilized $ZrO_2$ ceramics.

12. A pressure sensor according to one of the preceding Claims,
**characterised in that** the bearing ring or rings (2, 10) is/are made from a ceramic compound, for example glass ceramics, and is/are deposited in the screen printing process.

13. A pressure sensor according to one of the preceding Claims,
**characterised in that** the coated electrodes (5, 6, 7) are printed and burnt in as a paste.

14. A pressure sensor according to one of Claims 1 to 12,
**characterised in that** the coated electrodes (6, 7) are produced by means of a thin-film technique, in particular by evaporation or sputtering.

## Revendications

1. Capteur de pression capacitif résistant aux surcharges, avec deux plaques électriquement isolantes (1, 4) en un matériau obtenu par voie d'oxydation, en forme de disques circulaires reliés ensemble sur leurs zones de bordures par l'intermédiaire d'un élément annulaire (3) et susceptibles d'être sollicitées par la pression à mesurer, l'une d'entre elles revêtant la forme d'une membrane (4) sensible à la pression, plaques qui forment une chambre (9) remplie de gaz ou bien dans laquelle on a fait le vide, et dont les surfaces internes sont munies d'électrodes en couches (5, 6, 7) de forme circulaire et sous forme d'anneaux circulaires pour constituer un condensateur de mesure et un condensateur de référence, ces deux condensateurs présentant des dépendances différentes vis à vis de la pression, caractérisé en ce que :
    a) Les deux plaques (1, 4) ont des surfaces planes,
    b) au moins une des plaques (1 ou 4) est au moins un anneau de support en forme d'anneau circulaire (2, 10 ; 11) disposé au voisinage de la zone de bordure,
    c) une électrode en couches (7), en forme d'anneau circulaire du condensateur de référence, est disposée dans la zone de l'anneau de support (2, 10 ; 11) au voisinage de la zone de bordure et est reliée au corps de base (1) directement ou indirectement,
    d) sur la surface supérieure plane du corps de base (1), dans la zone qui correspond à l'intérieur de l'électrode en couches (7) de forme annulaire ou circulaire, est disposée une électrode en couches (6) du condensateur de mesure,
    e) sur la surface interne de la membrane (4) sensible à la pression, il est prévu une électrode en couches (5) s'étendant jusqu'à la zone de bordure, et qui constitue l'électrode antagoniste aussi bien pour le condensateur de mesure, qu'également pour le condensateur de référence.

2. Capteur de pression selon la revendication 1 caractérisé en ce que l'élément annulaire est un anneau de soudure en verre (3, 3a), qui est disposé entre la membrane (4) et le corps de base (1).

3. Capteur de pression selon la revendication 1 ou la revendication 2 caractérisé en ce que l'électrode en couches (7) de forme annulaire circulaire du condensateur de référence, est rapportée sur l'anneau de support (2) ou bien sur un des anneaux de support (2, 10).

4. Capteur de pression selon la revendication 1 caractérisé en ce que l'électrode en couches (7) de forme annulaire circulaire du condensateur de référence est rapportée au-dessous de l'anneau de support ou des anneaux de support (11) et le matériau du ou des anneaux de support (11) a une constante

diélectrique relative $\epsilon\gamma \gg 1$.

5. Capteur de pression selon une des précédentes revendications caractérisé en ce que l'anneau de support ou bien les anneaux de support (2, 10) est rapporté ou bien sont rapportés sur la surface plane du corps de base (1).

6. Capteur de pression selon la revendication 5 caractérisé en ce que deux anneaux de support (2, 10) de diamètres différents sont rapportés l'un sur l'autre sur le corps de base (1) de façon que leurs bords placés à l'intérieur forment en cas de surcharge des appuis pour la membrane (4).

7. Capteur de pression selon une des revendications 1 à 5, caractérisé en ce qu'au moins un anneau de support (11) est rapporté sur la surface interne de la membrane (4) sensible à la pression.

8. Capteur de pression selon la revendication 6, caractérisé en ce qu'il est prévu un seul anneau de support (2) dont le rayon interne (r*) est égal au rayon interne (R) de l'élément annulaire (3) multiplié par environ 0,61.

9. Capteur de pression selon la revendication 8, caractérisé en ce que l'anneau de support (2) a une épaisseur correspondant à 1,8 multiplié par l'épaisseur de l'élément annulaire (3) ou bien par l'épaisseur de la combinaison de l'élément annulaire (3a) et de l'anneau d'écartement (13).

10. Capteur de pression selon une des précédentes revendications, caractérisé en ce que sur la surface interne du corps de base (1) au-dessus de l'électrode en couches (6) du condensateur de mesure, est rapportée une couche isolante (12) qui recouvre sur toute sa surface l'électrode en couches (6) pour éviter un court-circuit électrique lors d'une charge de pression extrême.

11. Capteur de pression selon une des précédentes revendications, caractérisé en ce que les plaques sont constituées de céramique $Al_2O_3$, de céramique SiC, de quartz ou notamment de céramique $ZrO_2$ partiellement ou complètement stabilisée.

12. Capteur de pression selon une de précédentes revendications, caractérisé en ce que l'anneau de support ou bien les anneaux de support (2, 10) est constitué ou bien sont constitués d'une masse céramique par exemple une céramique de verre et sont rapportés, selon le procédé de sérigraphie.

13. Capteur de pression selon une des précédentes revendications caractérisé en ce que les électrodes en couches (5, 6, 7) sont imprimées sous la forme d'une pâte et cuites.

14. Capteur de pression selon une des revendications 1 à 12, caractérisé en ce que les électrodes en couches (6, 7) sont réalisées à l'aide d'une technique de couches minces, notamment par métallisation sous vide ou bien par pulvérisation.

# FIG.1

# FIG.2

# FIG.3

# FIG.4

# FIG . 5

# FIG .6

# FIG.7

# FIG.8